# EUROPÄISCHE PATENTSCHRIFT

(11) **EP 4 499 544 B1**
(45) Veröffentlichungstag und Bekanntmachung des Hinweises auf die Patenterteilung: **28.01.2026**
(21) Anmeldenummer: 23715505.6
(22) Anmeldetag: 28.03.2023
(51) Int. Cl.: B65G 39/09, B65G 39/20, B65G 54/02, H02K 41/03

(54) **TRANSPORTEINHEIT EINES LANGSTATORLINEARMOTORS**
TRANSPORT UNIT OF A LONG STATOR LINEAR MOTOR
UNITÉ DE TRANSPORT D'UN MOTEUR LINÉAIRE À STATOR LONG

(30) Priorität: 29.03.2022 AT 502012022
(43) Veröffentlichungstag der Anmeldung: 05.02.2025
(73) Patentinhaber: ABB Schweiz AG, 5400 Baden (CH)
(72) Erfinder: DAXECKER, David, 5142 Eggelsberg (AT); FÖLSCHE, Raphael, 5142 Eggelsberg (AT); DICKER, Alexander, 5142 Eggelsberg (AT)
(74) Vertreter: Patentanwälte Pinter & Weiss OG
(86) Internationale Anmeldenummer: PCT/EP2023/058018
(87) Internationale Veröffentlichungsnummer: WO 2023/186906

(56) Entgegenhaltungen:
- DE-A1- 10 214 295
- DE-C- 844 263
- DE-C- 862 877
- US-A- 4 231 466
- US-A- 4 444 301
- US-A1- 2019 375 597

## Beschreibung

Die gegenständliche Erfindung betrifft eine Transporteinheit eines Langstatorlinearmotors mit einem Grundkörper, welcher eine Antriebsmagnetanordnung umfasst, die zur Bewegung der Transporteinheit entlang einer Transportstrecke und zur Halterung der Transporteinheit an der Transporteinheit vorgesehen ist, und wobei der Grundkörper zumindest ein Wellenzapfen angeordnet ist, an dem eine Laufrolle drehbar gelagert angeordnet ist, wobei die Laufrolle eine erste axiale Stirnseite und eine gegenüberliegende zweite axiale Stirnseite aufweist und zwischen der ersten axialen Stirnseite und der zweiten axialen Stirnseite eine Lageranordnung vorgesehen ist, mit der die Laufrolle am Wellenzapfen drehbar gelagert angeordnet ist.

Langstatorlinearmotoren und deren Anwendungen, insbesondere für flexible Transportzwecke, sowie deren Funktionsweise sind seit vielen Jahren bekannt. Langstatorlinearmotoren bestehen allgemein aus einer Vielzahl von nebeneinander an einer Stützkonstruktion angeordneten Antriebsspulen, die den Langstator des Langstatorlinearmotor ausbilden. Der Langstator bildet eine Transportstrecke aus, entlang der einzelne Transporteinheiten bewegt werden können. Die möglichen Bewegungsrichtungen einer Transporteinheit folgen damit dem Langstator. Die Transporteinheiten werden mittels eines Führungssystems an der Transportstrecke gehalten und geführt. Zum Bewegen einer Transporteinheit sind an der Transporteinheit Antriebsmagnete (Permanent- oder Elektromagnete) angeordnet, die mit dem von den Antriebsspulen erzeugten Magnetfeld zusammenwirken. Durch gezieltes Ansteuern der Antriebsspulen, insbesondere durch Anlegen einer entsprechenden Spulenspannung zum Erzeugen eines Spulenstromes, kann ein in Bewegungsrichtung entlang der Transportstrecke bewegtes Magnetfeld erzeugt werden, wodurch eine mit dem bewegten Magnetfeld zusammenwirkende Transporteinheit in Bewegungsrichtung (Richtung des bewegten Magnetfeldes) bewegt werden kann. Auf diese Weise können auch eine Vielzahl von Transporteinheiten unabhängig voneinander und gleichzeitig entlang der Transportstrecke bewegt werden. Hierfür sind Antriebsspulen im Bereich der einzelnen Transporteinheiten zur Erzeugung bewegter Magnetfelder zu bestromen. Der Aufbau, die Funktion und die Steuerung solcher Langstatorlinearmotoren sind hinlänglich bekannt, weshalb hier nicht näher darauf eingegangen wird. Beispiele hierzu können der WO 2013/143783 A1, der WO 98/50760 A2, der US 6,876,107 B2, der US 2013/0074724 A1 oder der EP 1 270 311 B1 entnommen werden. In der Regel ist ein Langstatorlinearmotor mit einer Vielzahl von nebeneinander angeordneten Spulensegmenten, an denen jeweils eine Anzahl von Antriebsspulen angeordnet ist, aufgebaut, wie z.B. in der US 6,876,107 B2.

Eine Transporteinheit muss in geeigneter Weise an der Transportstrecke geführt werden. Hierfür sind an der Transporteinheit Führungsrollen drehbar gelagert angeordnet. Die Transporteinheit stützt sich über die Führungsrollen an zugeordneten Führungsflächen an der Transportstrecke ab und die Führungsrollen rollen bei Bewegung der Transporteinheiten an den zugeordneten Führungsflächen ab. Üblicherweise besteht eine Führungsrolle aus einer Laufrolle, die drehbar an einem Wellenzapfen, der an der Transporteinheit angeordnet ist, gelagert ist. Üblicherweise kommen hierfür Wälzlager zum Einsatz um die Laufrolle drehbar am Wellenzapfen zu lagern, wobei aber auch andere Lagertypen, wie Gleitlager, grundsätzlich denkbar sind.

Weiterhin ist aus der US 2019/0375597 A1 eine Transporteinheit für einen Langstatorlinearmotor bekannt, wobei die Transporteinheit einen Grundkörper aufweist. Dieser Grundkörper weist einerseits mindestens eine geformte Laufrolle auf und andererseits Magnetelemente, welche mit einem von Antriebsspulen erzeugten Magnetfeld zusammenwirken, um die Transporteinheit entlang der Transportstrecke zu bewegen und an der Transportstrecke zu halten.

Transporteinrichtungen in Form eines Langstatorlinearmotors werden auch in sogenannten Hygieneanwendungen eingesetzt, in denen besondere Anforderungen an die Hygiene gestellt werden. Beispielsweise kann gefordert sein, dass die Transporteinrichtung abwaschbar sein muss, auch mit einem Waschmedium unter Druck (beispielsweise mit einem Hochdruckreiniger). Eine andere Anforderung einer Hygieneanwendung kann sein, dass der Langstatorlinearmotor und Teile davon so ausgeführt sein müssen, dass sich wenige Möglichkeiten zur Ablagerung von Schmutz und Verunreinigungen ergeben, beispielsweise möglichst keine Schlitze, Spalten, Vertiefungen usw. Die DE 844 263 C zeigt beispielsweise Laufrollen für einen Kettenförderer, bei welchen in den Rollenkörper eingebaute Wälzlager mit ein oder zwei elastischen Dichtungen gegen Verschmutzungen von außen gesichert sind.

Eine Hygieneanwendung eines Langstatorlinearmotors erfordert daher möglichst glatte Außenflächen an der Transportstrecke und den Transporteinheiten und auch eine hohe Dichtheit für Reinigungszwecke. Beispielsweise kann eine Anforderung gegen das Eindringen von Wasser in Komponenten des Langstatorlinearmotors analog wie bei elektrischen Betriebsmitteln mit der IP-Schutzart nach ISO 20653 ausgedrückt werden.

Insbesondere die Lagerung der Führungsrollen stellt hinsichtlich der Hygieneanforderungen eine Herausforderung dar. Es gibt zwar abgedichtete Wälzlager, die für die Lagerung verwendet werden können, nur bilden sich dabei in der Führungsrolle Vertiefungen und Ausnehmungen im Bereich der Lagerung aus, die in einer Hygieneanwendung unerwünscht sind. Nicht abgedichtete Wälzlager sind, je Anforderungen, für Hygieneanwendung nur bedingt geeignet bis gänzlich ungeeignet. Ebenso stellt auch die Forderung eines spritzwassergeschützten Designs der Führungsrollen, insbesondere bei unter Druck stehenden Reinigungsmedien, eine Herausforderung dar.

Es besteht somit eine Notwendigkeit, Führungsrollen an Transporteinheiten einer Transporteinrichtung in Form eines Langstatorlinearmotors anzugeben, die den Anforderungen in Hygieneanwendungen gerecht wird.

Das wird dadurch erreicht, indem eine Transporteinheit nach Anspruch 1 bereitgestellt wird. Dabei ist die erste axiale Stirnseite durch eine Stirnwand geschlossen und die zweite Stirnseite offen ausgeführt, sodass sich im Inneren der Laufrolle eine Lagerausnehmung ausbildet, die an einer Seite durch die Stirnwand axial begrenzt ist, dass der Wellenzapfen durch die offene zweite axiale Stirnseite in die Lagerausnehmung hineinragt und die Lageranordnung in der Lagerausnehmung am Wellenzapfen angeordnet ist und im Bereich der zweiten Stirnseite ein sich zwischen dem zentral angeordneten Wellenzapfen und der inneren Umfangsfläche der Lagerausnehmung ausbildender Ringbereich durch eine Dichteinheit abgeschlossen ist.

Auf diese Weise gelingt ein nach außen abgedichtetes, für Hygieneanforderungen geeignetes Rollendesign, das an der Außenseite wenig Möglichkeiten für die Anlagerung von Schmutz bietet und das gegen Spritzwasser geschützt ist.

Bevorzugterweise ist die Laufrolle bzw. die Laufrolleneinheit Teil einer Führungsrollenanordnung, die aus der Laufrolle, dem Wellenzapfen, der Lageranordnung und der Dichteinheit besteht, wobei die Führungsrollenanordnung über einen aus der Führungsrollenanordnung axial vorstehenden axialen Ende des Wellenzapfens, an der Transporteinheit befestigt ist. Damit kann eine Laufrolle bzw. eine Laufrolleneinheit einer Transporteinheit einfach gewechselt werden.

Eine einfache, bevorzugte Ausführung ergibt sich, wenn die Lageranordnung als Wälzlager ausgeführt ist, und der Innenring des Wälzlagers an einer radialen Abstufung des Wellenzapfens anliegt und der Außenring des Wälzlagers in der Lagerausnehmung angeordnet ist. Dabei ist es vorteilhaft, wenn der Innenring des Wälzlagers mit einer Fixierkappe, die in ein Innengewinde des Wellenzapfens geschraubt ist, gegen die radiale Abstufung gedrückt ist. Zusätzlich kann der Außenring des Wälzlagers in der Laufrolle durch einen in einer Umfangsnut der Innenumfangsfläche der Lagerausnehmung eingesetzten Sicherungsring axial fixiert ist.

In einer besonders vorteilhaften Ausführung ist die Dichteinheit als Wellendichtring ausgeführt. Wellendichtringe gibt es in vielfältigsten Ausführungsformen, was diese in dieser Anwendung flexible einsetzbar macht.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 einen Abschnitt einer Transportstrecke einer Transporteinrichtung in Form eines Langstatorlinearmotors mit einer Transporteinheit,
Fig.2 eine Ausführung einer Laufrolle bzw. eine Laufrolleneinheit an der Transporteinheit,
Fig.3 eine Ausführung der Laufrolle in Form einer Führungsrollenanordnung,
Fig.4 und 5 eine mögliche Implementierung einer Führungsrollenanordnung und
Fig.6 eine geteilte Transporteinheit mit erfindungsgemäßen Laufrollen und einer Torsionsstabfeder.

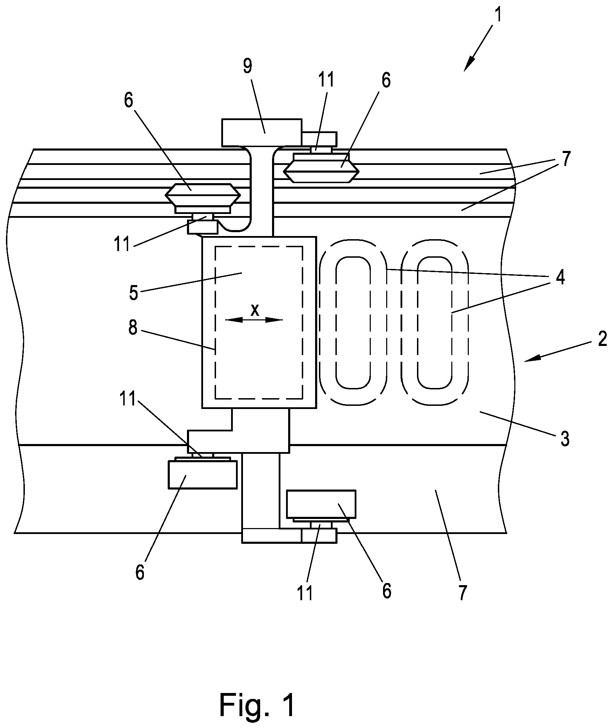

Fig.1 zeigt einen kurzen Abschnitt einer Transportstrecke 2 einer Transporteinrichtung 1 in Form eines Langstatorlinearmotors. Die Transportstrecke 2 wird vom Langstator 3 des Langstatorlinearmotors ausgebildet, an dem entlang der Transportstrecke 2 eine Vielzahl von elektrischen Antriebsspulen 4 (in Fig.1 sind zwei der Antriebsspulen gestrichelt angedeutet) angeordnet sind. Eine Transporteinheit 5 bewegt sich in Bewegungsrichtung x (durch Doppelpfeil in Fig.1 angedeutet) entlang der Transportstrecke 2. Hierfür sind an der Transporteinheit 5 Laufrollen 6 drehbar gelagert angeordnet, die auf zugeordneten Laufflächen 7 an der Transportstrecke 2 abrollen. Die für die Bewegung der Transporteinheit 5 notwendige Antriebsmagnetanordnung 8, beispielsweise in Form einer Permanentmagnetanordnung, an der Transporteinheit 5 ist in Fig.1 angedeutet.

Für die gegenständliche Erfindung ist die Anzahl der Laufrollen 6, die geometrische Form der Laufrollen 6 und der Laufflächen 7 und die Ausrichtung der Drehachsen der Laufrollen 6 unerheblich. Bei der Bewegung der Transporteinheit 5 entlang der Transportstrecke 2 rollt eine Laufrollen 6 an einer zugeordneten Lauffläche 7 ab. Ebenso ist die Form und die Geometrie einer Transporteinheit 5 für die Erfindung unerheblich. Die Transportstrecke 2 kann derart angeordnet sein, dass die Transporteinheit 5 oben auf der Transportstrecke 2 fährt oder seitlich an der Transportstrecke 2. Grundsätzlich ist bei entsprechender Ausführung des Führungssystems auch eine hängende Ausführung der Transporteinheit 5 an der Unterseite einer Transportstrecke 2 möglich.

Neben der zumindest einen Laufrolle 6 können an der Transporteinheit 5 bedarfsweise auch andere Führungseinheiten zur Führung der Transporteinheit 5 entlang der Transportstrecke 2 vorgesehen sein, beispielsweise in Form von Gleitflächen an der Transporteinheit 5, die an zugeordneten Gleitflächen an der Transportstrecke 2 abgleiten.

Die Transporteinheit 5 weist einen Grundkörper 9 auf, an dem zumindest eine Laufrolle 6 drehbar gelagert angeordnet ist. Am Grundkörper 9 ist zumindest ein Wellenzapfen 11 angeordnet, an dem die zumindest eine Laufrolle 6 drehbar gelagert angeordnet ist.

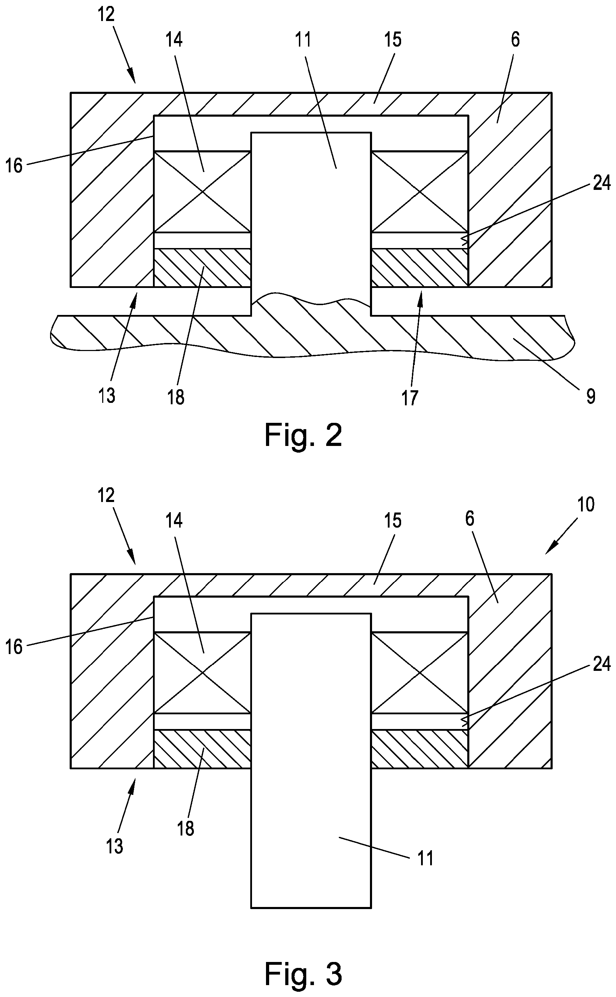

Wie in Fig.2 schematisch dargestellt, hat die Laufrolle 6 eine erste axiale Stirnseite 12 und eine gegenüberliegende zweite axiale Stirnseite 13. Die erste axiale Stirnseite 12 ist der Transporteinheit 5 oder dem Grundkörper 9 abgewandt angeordnet und bildet damit eine "Außenseite" der Transporteinheit 5 aus. Zwischen der ersten axialen Stirnseite 12 und der zweiten axialen Stirnseite 13 ist eine Lageranordnung 14 vorgesehen, mit der die Laufrolle 6 am Wellenzapfen 11 drehbar gelagert angeordnet ist. Die erste axiale Stirnseite 12 ist durch eine Stirnwand 15 geschlossen ausgeführt.

Die Stirnwand 15 ist vorzugsweise integraler Teil der Laufrolle 6, sodass die Stirnwand 15 mit der, die Lauffläche ausbildenden Umfangswand der Laufrolle 6 einstückig ausgeführt ist. Die Stirnwand 15 kann aber auch als separater Bauteil gefertigt sein, der an einer Stirnseite an der Laufrolle 6 befestigt ist, beispielsweise formschlüssig, kraftschlüssig oder stoffschlüssig.

Die zweite Stirnseite 13 ist offen ausgeführt, sodass sich im Inneren der Laufrolle 6 eine Lagerausnehmung 16 ausbildet, die an einer Seite durch die Stirnwand 15 axial begrenzt ist und an der anderen Seite offen ist. Der Wellenzapfen 11 ragt durch die offene zweite axiale Stirnseite 13 in die Lagerausnehmung 16 hinein und die Lageranordnung 14 ist in der Lagerausnehmung 16 am Wellenzapfen 11 angeordnet. Im Bereich der zweiten Stirnseite 13 bildet sich zwischen dem zentral angeordneten Wellenzapfen 11 und der inneren Umfangsfläche 24 der Lagerausnehmung 16 ein freier Ringbereich 17 aus, der durch eine Dichteinheit 18 abgeschlossen ist.

Die Dichteinheit 18 schließt vorzugsweise axial möglichst bündig mit der zweiten axialen Stirnseite 13 ab, sodass eine möglichst glatte Stirnfläche entsteht.

Auf diese Weise kann eine abgedichtetes Rollendesign realisiert werden, das außen möglichst wenige Vertiefungen, Ausnehmungen, Ritzen, Spalten usw. aufweist, in denen sich Verunreinigungen ansammeln können. Zudem ist das Innere der Rolle gegen Flüssigkeiten abgedichtet. Hierfür sorgt die an der ersten axialen Stirnseite 12 und der Umfangsfläche geschlossene Laufrolle 6 und die Dichteinheit 18, die die Lagerausnehmung 16 nach außen abschließt.

In einer vorteilhaften Ausgestaltung ist die zumindest eine Laufrolle 6 Teil einer Führungsrollenanordnung 10, wie in Fig.3 dargestellt. Die Führungsrollenanordnung 10 besteht aus der Laufrolle 6 bzw. der Laufrolleneinheit und dem Wellenzapfen 11, wobei die Laufrolle 6 bzw. die Laufrolleneinheit wie oben beschrieben am Wellenzapfen 11 gelagert ist. Eine solche Anordnung hat den Vorteil, dass die Führungsrollenanordnung 10, und damit auch die Laufrolle 6 oder die Laufrolleneinheit, einfach getauscht werden kann. Hierfür kann die Führungsrollenanordnung 10 mit dem freien Ende des Wellenzapfens 11 am Grundkörper 9 austauschbar befestigt sein, beispielsweise in ein Innengewinde am Grundkörper 9 geschraubt sein oder auf einen Gewindezapfen am Grundkörper 9 mit einem Innengewinde am Wellenzapfen 11 aufgeschraubt sein.

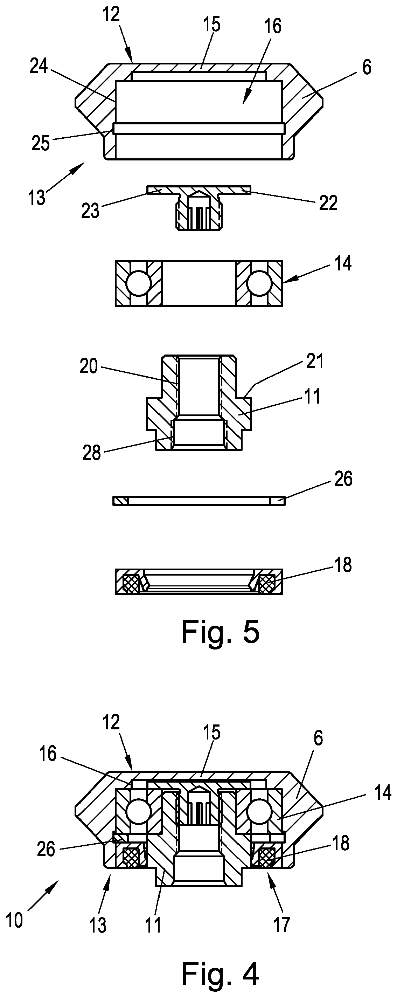

Eine mögliche Ausführung einer Führungsrollenanordnung 10 ist in den Figuren 4 und 5 dargestellt, wobei die Fig.5 eine Explosionsdarstellung der Anordnung in Fig.4 darstellt.

Der Wellenzapfen 11 ist in dieser Ausführung ein Hohlzapfen mit einem ersten Innengewinde 20 an einem ersten axialen Ende des Wellenzapfens 11. Radial außen ist der Wellenzapfen 11 an diesem ersten axialen Ende radial abgestuft. An dieser radialen Abstufung 21 wird der Innenring eines Wälzlagers als Lageranordnung 14 angelegt. Am gegenüberliegenden axialen Ende des Wälzlagers wird eine Fixierkappe 22 mit einem Außengewinde in das erste Innengewinde des Wellenzapfens 11 geschraubt. Ein radial abstehender Fixierbund 23 an der Fixierkappe 22 liegt in der montierten Lage ebenfalls am Innenring des Wälzlagers an und drückt den Innenring gegen die Abstufung 21. Der Innenring ist damit am Wellenzapfen 11 fixiert. Der Außenring des Wälzlagers wird in die Lagerausnehmung 16 gepresst, sodass die Laufrolle 6 am Außenring des Wälzlagers fixiert ist. Der Außendurchmesser des Außenringes des Wälzlagers und der Innendurchmesser der inneren Umfangsfläche 24 bildet hierzu im Bereich der Lageranordnung 14 beispielsweise eine Presspassung aus. Der Außenring kann axial zusätzlich mit einem Sicherungsring 26, der in einer Umfangsnut 25 an der inneren Umfangsfläche 24 der Lagerausnehmung 16, eingesetzt wird, fixiert werden. In den freien Ringbereich 17 im Bereich der zweiten axialen Stirnseite 13 und zwischen dem Wellenzapfen 11 und der Umfangsfläche 24 der Lagerausnehmung 16 ist als Dichteinheit 18 ein Wellendichtring eingesetzt.

Der Wellendichtring kann mit einer radial inneren Dichtlippe ausgeführt sein (wie in Fig.4 und 5), die am Wellenzapfen 11 anliegt und gegen den Wellenzapfen 11 abdichtet. Der Wellendichtring dreht sich in dieser Ausführung mit der Laufrolle 6 mit. Der Wellendichtring kann aber auch mit einer radial äußeren Dichtlippe ausgeführt sein. In dieser Ausführung kann der Wellendichtring mit dem Wellenzapfen drehfest angeordnet sein. Natürlich gibt es eine Fülle von anderen möglichen Ausführungen eines Wellendichtringes, beispielsweise auch mit mehreren Dichtlippen oder in einer Ausführung als Axial-Wellendichtring.

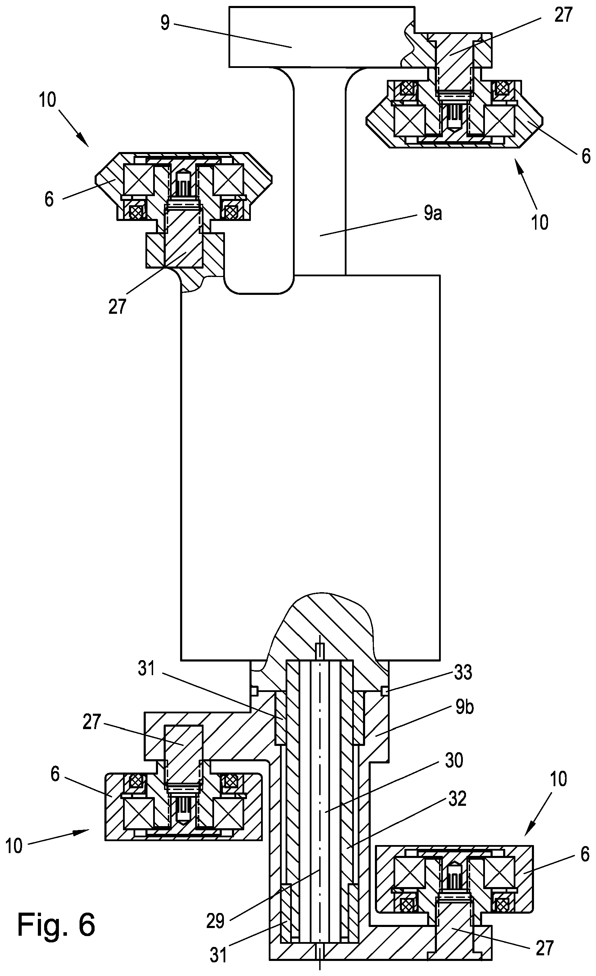

Am zweiten axialen Ende des Wellenzapfens 11 kann ein zweites Innengewinde 28 vorgesehen sein. Über dieses zweite Innengewinde 28 kann die Führungsrollenanordnung 10 auf einen Gewindezapfen 27 (Fig.6) am Grundkörper 9 der Transporteinheit 5 aufgeschraubt werden.

Fig.6 zeigt eine Transporteinheit 5 mit vier Laufrollen 6. In der gezeigten Ausführung sind alle Laufrollen 6 Teil einer Führungsrollenanordnung 10, was aber nicht zwingend der Fall sein muss. Die Führungsrollenanordnungen 10 sind auf Gewindezapfen 27 an der Transporteinheit 5 befestigt, hier aufgeschraubt. Die Gewindezapfen 27 sind in geeigneter Weise an der Transporteinheit 5 befestigt, beispielsweise in eine Ausnehmung an der Transporteinheit 5 eingepresst oder darin verschweißt oder in ein Innengewinde an der Transporteinheit 5 eingeschraubt.

Es ist bekannt, dass ein Körper mit vier Auflagepunkten aufgrund der üblichen Toleranzen in der Regel statisch überbestimmt ist und daher nur an drei der Auflagepunkten sicher aufliegt. Im Fall einer Transporteinheit 5 kann das bedeuten, dass die Transporteinheit 5 nur an drei Laufrollen 6 geführt ist, eine Laufrolle 6 also gar nicht an der zugeordneten Lauffläche 7 abrollt. Das kann auch dazu führen, dass die Transporteinheit 5 neben der gewünschten Vorwärtsbewegung auch unerwünschte Relativbewegungen zur Transportstrecke 2 erfährt.

Um das zu vermeiden ist in der erfindungsgemäßen Ausführung der Transporteinheit 5 nach Fig.6 der Grundkörper 9 zweiteilig ausgeführt. Der erste Grundkörperteil 9a und der zweite Grundkörperteil 9b sind relativ zueinander um eine Drehachse 29 verdrehbar angeordnet.

Die Drehachse 29 ist vorzugsweise normal zur Bewegungsrichtung x ausgerichtet. Zwischen dem ersten Grundkörperteil 9a und dem zweiten Grundkörperteil 9b ist ein Torsionsdrehstab 30 angeordnet.

Aufgrund der Antriebsmagnetanordnung 8 an der Transporteinheit 5 entsteht eine Anziehungskraft, die die Transporteinheit 5 in Richtung zur Transportstrecke 2 zieht, wodurch die Transporteinheit 5 auch an der Transportstrecke 2 gehalten wird und nicht herunterfällt. Diese Anziehungskraft wird aufgeteilt an den Kontaktpunkten der Laufrollen 6 an den zugeordneten Laufflächen 7 aufgenommen, wodurch auf die Laufrollen 6 Normalkräfte (normal auf die Laufflächen 7) wirken. Diese Normalkräfte bewirken ein Drehmoment und damit eine Torsion in gewissen Bauteilen der Transporteinheit 5, an denen die Laufrollen 6 angeordnet sind. Durch diese wirkenden Normalkräfte wird der erste Grundkörperteil 9a entgegen der Wirkung des Torsionsdrehstabes 30 auch gegenüber dem zweiten Grundkörperteil 9b verdreht. Das sorgt dafür, dass die Transporteinheit 5 immer sicher an allen Laufrollen 6 an den zugehörigen Laufflächen 7 anliegen und daran abrollen.

Der Torsionsdrehstab 30 wird durch die Normalkräfte aus einer Nullstellung, in der keine Torsionsspannung im Torsionsdrehstab 30 wirkt, verdreht, wodurch eine Torsionsspannung im Torsionsdrehstab 30 in Abhängigkeit von Verdrehwinkel entsteht. Die entstehende Torsionsspannung ist, neben den Normalkräften, dabei natürlich auch abhängig von der Geometrie des Torsionsdrehstabes 30, beispielsweise vom Durchmesser, und auch vom Material des Torsionsdrehstabes 30, üblicherweise ein Stahl. Die im Betrieb der Transporteinheit 5 wirkenden Normalkräfte oder das dadurch wirkende Drehmoment können aus der Auslegung und Geometrie der Transporteinheit 5 als bekannt vorausgesetzt werden.

Die aufgrund der im Betrieb der Transporteinheit 5 wirkenden Normalkräfte entstehende Torsionsspannung im Torsionsdrehstab 30, und damit auch die unmittelbar damit zusammenhängende Federwirkung des Torsionsdrehstabes 30, kann daher über die Geometrie des Torsionsdrehstabes 30, insbesondere des Durchmessers des Torsionsdrehstabes 30, eingestellt werden. Dabei hat es sich herausgestellt, dass der Torsionsdrehstab 30 vorteilhafterweise so ausgelegt wird, dass die aufgrund der im Betrieb der Transporteinheit 5 auf die Laufrollen 6 wirkenden Normalkräfte entstehende Torsionsspannung im Torsionsdrehstab 30 im Bereich von 40%, vorzugsweise 50%, bis maximal 100% der maximal zulässigen Torsionsspannung des Torsionsdrehstabes 30 liegt.

Die maximal zulässige Torsionsspannung ist ein Materialparameter des Materials des Torsionsdrehstabes 30 und ist bekannt. Die Torsionsspannung in der Torsionsfeder 30 soll diese maximal zulässige Torsionsspannung nicht überschreiten, weil es dann zu einer unerwünschten plastischen Verformung des Torsionsdrehstabes 30 kommen würde. Bei einer Torsionsspannung in der Torsionsfeder 30 kleiner 40% würde eine für diese Anwendung zu geringe Federwirkung, und damit auch eine zu geringe Torsionssteifigkeit, entstehen.

Mit Hilfe des Torsionsdrehstabes 30 kann man daher auf einfache Weise und mit wenig Platzbedarf die Torsionssteifigkeit einer Transporteinheit 5 mit einem geteilten Grundkörper 9 einstellen.

Das könnte man auch dadurch erreichen, dass die Transporteinheit 5 an einer bestimmten Stelle mechanisch derart geschwächt wird, beispielsweise durch eine geeignete Geometrie, dass sich an dieser Stelle die gewünschte Torsionssteifigkeit einstellt. Das hätte aber den Nachteil, dass man die Transporteinheit 5 nicht nur hinsichtlich der Torsion schwächt, sondern auch hinsichtlich anderer Aspekte. Beispielsweise könnte das auch die zulässige Beladung oder eine zulässige Vortriebskraft zum Bewegen der Transporteinheit 5 beschränken, was aber unerwünscht wäre. Mit dem Torsionsdrehstab 30 kann man gezielt die Torsionssteifigkeit einstellen, ohne an anderen Stellen Abstriche machen zu müssen. Der Torsionsdrehstab 30 ist drehfest im ersten Grundkörperteil 9a und drehfest im zweiten Grundkörperteil 9b angeordnet, beispielsweise kraftschlüssig, formschlüssig oder stoffschlüssig (oder eine Kombination daraus), beispielsweise durch Einpressen, Kleben oder Verschweißen. Der Torsionsdrehstab 30 verbinden damit den ersten Grundkörperteil 9a und den zweiten Grundkörperteil 9b miteinander, die über den Torsionsdrehstab 30 relativ zueinander verdrehbar sind.

In der Ausführung nach Fig.6 sind im zweiten Grundkörperteil 9b Lagerungen 31, beispielsweise Gleitlager oder Wälzlager, angeordnet, an denen ein Teil des ersten Grundkörperteil 9a, beispielsweise eine Drehhülse 32, drehbar gelagert ist.

Zwischen dem ersten Grundkörperteil 9a und den zweiten Grundkörperteil 9b kann auch ein Dichtelement 33, wie beispielsweise ein Dichtring, angeordnet sein. Das Dichtelement 33 verhindert das Eindringen von Flüssigkeit, was insbesondere bei Hygieneanwendungen wichtig ist.

Die Verwendung eines Torsionsdrehstabes 30 in einer Transporteinheit 5 eines Langstatorlinearmotors zur Einstellung einer gewünschten Torsionssteifigkeit ist natürlich unabhängig von der Ausführung der Laufrollen 6 der Transporteinheit 5, die entsprechenden Merkmale des Anspruchs 1 aufweisen, ansonsten nicht zwingend wie oben mit Bezugnahme auf die Figuren 2 bis 5 beschrieben ausgeführt sein müssen.

Die Transporteinheit besteht aus einem Grundkörper 9 mit einer Antriebsmagnetanordnung 8, an dem eine Mehrzahl von Laufrollen 6 drehbar gelagert angeordnet sind. Der Grundkörper 9 besteht aus einem ersten Grundkörperteil 9a und einem zweiten Grundkörperteil 9b, die relativ zueinander verdrehbar sind, indem ein Torsionsdrehstab 30 im ersten Grundkörperteil 9a und im zweiten Grundkörperteil 9b drehfest angeordnet ist und der Torsionsdrehstab 30 den ersten Grundkörperteil 9a und den zweiten Grundkörperteil 9b verdrehbar miteinander verbindet.

Dabei ist es vorteilhaft, wenn eine im Betrieb der Transporteinheit 5 im Torsionsdrehstab 30 auftretende Torsionsspannung im Bereich zwischen 40% und 100% einer bekannten maximal zulässigen Torsionsspannung (ein Materialparameter des Materials des Torsionsdrehstab 30) liegt. Das kann durch Auslegung der Geometrie des Torsionsdrehstabes 30, insbesondere eines Durchmessers des Torsionsdrehstab 30, eingestellt werden.

Zusätzlich kann an einer solchen Transporteinheit 5 im zweiten Grundkörperteil 9b eine Lagerung 31 vorgesehen sein, in der ein Teil des ersten Grundkörperteils 9a drehbar gelagert angeordnet ist. Damit kann erreicht werden, dass die Transporteinheit 5, abgesehen von der gewünschten Torsionssteifigkeit, festigkeitsmäßig bzw. steifigkeitsmäßig nicht oder nicht zu sehr geschwächt wird.

Ferner kann zwischen dem ersten Grundkörperteil 9a und dem zweiten Grundkörperteil 9b ein Dichtelement 33 angeordnet sein.

## Patentansprüche

1. Transporteinheit für einen Langstatorlinearmotor, mit einem Grundkörper (9), welcher eine Antriebsmagnetanordnung (8) umfasst, die zur Bewegung der Transporteinheit (5) entlang einer Transportstrecke (2) und zur Halterung der Transporteinheit (5) an der Transportstrecke (2) vorgesehen ist, und wobei am Grundkörper (9) zumindest ein Wellenzapfen (11) angeordnet ist, an dem eine Laufrolle (6) drehbar gelagert angeordnet ist, wobei die Laufrolle (6) eine erste axiale Stirnseite (12) und eine gegenüberliegende zweite axiale Stirnseite (13) aufweist und zwischen der ersten axialen Stirnseite (12) und der zweiten axialen Stirnseite (13) eine Lageranordnung (14) vorgesehen ist, mit der die Laufrolle (6) am Wellenzapfen (11) drehbar gelagert angeordnet ist, **dadurch gekennzeichnet, dass** die erste axiale Stirnseite (12) durch eine Stirnwand (15) geschlossen ist und die zweite Stirnseite (13) offen ausgeführt ist, sodass sich im Inneren der Laufrolle (6) eine Lagerausnehmung (16) ausbildet, die an einer Seite durch die Stirnwand (15) axial begrenzt ist, **dass** der Wellenzapfen (11) durch die offene zweite axiale Stirnseite (13) in die Lagerausnehmung (16) hineinragt und die Lageranordnung (14) in der Lagerausnehmung (16) am Wellenzapfen (11) angeordnet ist, **dass** im Bereich der zweiten Stirnseite (13) ein sich zwischen dem zentral angeordneten Wellenzapfen (11) und der inneren Umfangsfläche (24) der Lagerausnehmung (16) ausbildender Ringbereich durch eine Dichteinheit (18) abgeschlossen ist, ***und dass*** der Grundkörper (9) aus einem ersten Grundkörperteil (9a) und einem zweiten Grundkörperteil (9b) besteht, die relativ zueinander verdrehbar sind, indem ein Torsionsdrehstab (30) im ersten Grundkörperteil (9a) und im zweiten Grundkörperteil (9b) drehfest angeordnet ist und der Torsionsdrehstab (30) den ersten Grundkörperteil (9a) und den zweiten Grundkörperteil (9b) verdrehbar miteinander verbindet.

2. Transporteinheit nach Anspruch 1, **dadurch gekennzeichnet, dass** der Torsionsdrehstab (30) ausgelegt ist, sodass eine im Betrieb der Transporteinheit (5) im Torsionsdrehstab (30) auftretende Torsionsspannung im Bereich zwischen 40% und 100% einer maximal zulässigen Torsionsspannung liegt, wobei die maximal zulässige Torsionsspannung ein bekannter Materialparameter eines Materials des Torsionsdrehstabs (30) ist.

3. Transporteinheit nach Anspruch 1 oder 2, **dadurch gekennzeichnet, dass** im zweiten Grundkörperteil (9b) eine Lagerung (31) vorgesehen sein, in der ein Teil des ersten Grundkörperteils (9a) drehbar gelagert angeordnet ist.

4. Transporteinheit nach einem der Ansprüche 1 bis 3, **dadurch gekennzeichnet, dass** zwischen dem ersten Grundkörperteil (9a) und dem zweiten Grundkörperteil (9b) ein Dichtelement (33) angeordnet ist.

5. Transporteinheit nach einem der Ansprüche 1 bis 4, **dadurch gekennzeichnet, dass** eine Drehachse (29), um welche der erste Grundkörper (9a) und der zweite Grundkörper (9b) relativ zueinander verdrehbar angeordnet sind, normal zu einer Bewegungsrichtung (x) der Transporteinheit ausgerichtet ist.

## Claims

1. A transport unit for a long stator linear motor having a base body (9) which comprises a drive magnet arrangement (8) for moving the transport unit (5) along a transport path (2) and for holding the transport unit (5) on the transport path (2), and wherein at least one shaft journal (11) is arranged on the base body (9), on which shaft journal (11) a roller (6) is rotatably mounted, wherein the roller (6) has a first axial end face (12) and an opposite second axial end face (13), and a bearing arrangement (14) is provided between the first axial end face (12) and the second axial end face (13), by which bearing arrangement (14) the roller (6) is mounted rotatably on the shaft journal (11), **characterized in that** the first axial end face (12) is closed by an end wall (15), and the second end face (13) is open, such that a bearing recess (16) is formed inside the roller (6), which bearing recess (16) is axially limited on one side by the end wall (15), **in that** the shaft journal (11) projects through the open second axial end face (13) into the bearing recess (16), and the bearing arrangement (14) is arranged in the bearing recess (16) on the shaft journal (11), **in that** in the region of the second end face (13), an annular region forming between the centrally arranged shaft journal (11) and the inner circumferential surface (24) of the bearing recess (16) is closed off by a sealing unit (18), **and in that** the base body (9) consists of a first base body part (9a) and a second base body part (9b) which can be twisted relative to one another in that a torsion bar (30) is arranged in the first base body part (9a) and in the second base body part (9b) in a rotationally fixed manner, and the torsion bar (30) connects the first base body part (9a) and the second base body part (9b) in a twistable manner.

2. The transport unit according to claim 1, **characterized in that** the torsion bar (30) is designed such that a torsional stress occurring in the torsion bar (3) during operation of the transport unit is in the range between 40% and 100% of a maximum permissible torsional stress, wherein the maximum permissible torsional stress is a known material parameter of a material of the torsion bar (30).

3. The transport unit according to claim 1 or 2, **characterized in that** in the second base body part (9b), a bearing (31) is provided in which a part of the first base body part (9a) is rotatably mounted.

4. The transport unit according to claims 1 to 3, **characterized in that** a sealing element (33) is arranged between the first base body part (9a) and the second base body part (9b).

5. The transport unit according to any one of claims 1 to 4, **characterized in that** an axis of rotation (29) about which the first body (9a) and the second base body (9b) are rotatably arranged relative to one another is aligned normal to a direction of movement (x) of the transport unit.

## Revendications

1. Unité de transport pour un moteur linéaire à stator long, avec un corps de base (9), qui comprend un ensemble magnétique d'entraînement (8), qui est prévu pour déplacer l'unité de transport (5) le long d'une voie de transport (2) et pour maintenir l'unité de transport (5) sur la voie de transport (2), et au moins un tourillon (11) d'arbre, sur lequel un galet de roulement (6) est monté de manière à pouvoir tourner, étant disposé sur le corps de base (9), le galet de roulement (6) comportant un premier côté frontal axial (12) et un second côté frontal opposé (13) et un ensemble de paliers (14), avec lequel le galet de roulement (6) est monté de manière à pouvoir tourner sur le tourillon (11) d'arbre, étant prévu entre le premier côté frontal axial (12) et le second côté frontal axial (13), **caractérisée en ce que** le premier côté frontal axial (12) est fermé par une paroi frontale (15) et le second côté frontal (13) est réalisé de manière ouverte si bien que se forme à l'intérieur du galet de roulement (6) un évidement (16) de palier, qui est délimité axialement par la paroi frontale (15) sur un côté, que le tourillon (11) d'arbre dépasse dans l'évidement (16) de palier par le second côté frontal axial (13) ouvert et l'ensemble de paliers (14) est disposé sur le tourillon (11) d'arbre dans l'évidement (16) de palier, qu'une zone annulaire se formant entre le tourillon (11) d'arbre disposé au centre et la surface périphérique intérieure (24) de l'évidement (16) de palier est fermée par une unité d'étanchéité (18) dans la zone du second côté frontal (13), et que le corps de base (9) est constitué d'une première partie (9a) de corps de base et d'une seconde partie (9b) de corps de base qui peuvent tourner l'une par rapport à l'autre **en ce qu'**une tige rotative de torsion (30) est disposée de manière solidaire en rotation dans la première partie (9a) de corps de base et dans la seconde partie (9b) de corps de base et la tige rotative de torsion (30) relie la première partie (9a) de corps de base et la seconde partie (9b) de corps de base l'une à l'autre de manière à pouvoir tourner.

2. Unité de transport selon la revendication 1, **caractérisée en ce que** la tige rotative de torsion (30) est conçue de telle sorte qu'une tension de torsion apparaissant dans la tige rotative de torsion (30) lors du fonctionnement de l'unité de transport (5) se situe dans la plage entre 40 % et 100 % d'une tension de torsion maximale admissible, la tension de torsion maximale admissible étant un paramètre de matériau connu d'un matériau de la tige rotative de torsion (30).

3. Unité de transport selon la revendication 1 ou 2, **caractérisée en ce qu'**est prévu dans la seconde partie (9b) de corps de base un support (31), dans lequel une partie de la première partie (9a) de corps de base est montée de manière à pouvoir tourner.

4. Unité de transport selon l'une des revendications 1 à 3, **caractérisée en ce qu'**un élément d'étanchéité (33) est disposé entre la première partie (9a) de corps de base et la seconde partie (9b) de corps de base.

5. Unité de transport selon l'une des revendications 1 à 4, **caractérisée en ce qu'**un axe de rotation (29), autour duquel le premier corps de base (9a) et le second corps de base (9b) sont disposés de manière à pouvoir tourner l'un par rapport à l'autre, est orienté de manière normale par rapport à une direction de déplacement (x) de l'unité de transport.
